# FASCICULE DE BREVET EUROPEEN

(11) **EP 4 065 629 B1**
(45) Date de publication et mention de la délivrance du brevet: **17.07.2024**
(21) Numéro de dépôt: 20824317.0
(22) Date de dépôt: 26.11.2020
(51) Int. Cl.: C08G 77/12, C08G 77/20, C08L 83/04, C09D 183/04, B32B 25/04, B32B 25/20

(54) **STRATIFIÉ À BASE DE COMPOSITIONS DE CAOUTCHOUC SILICONE**
LAMINAT MIT SILIKON-KAUTSCHUKZUSAMMENSETZUNGEN
LAMINATE COMPRISING SILICONE RUBBER COMPOSITIONS

(30) Priorité: 29.11.2019 FR 1913474
(43) Date de publication de la demande: 05.10.2022
(73) Titulaire: Compagnie Générale des Etablissements Michelin, 63000 Clermont-Ferrand (FR)
(72) Inventeur: FEDURCO, Milan, 63040 Clermont-Ferrand Cedex 9 (FR); RIBEZZO, Marco, 63040 Clermont-Ferrand Cedex 9 (FR); DELFINO, Antonio, 63040 Clermont-Ferrand Cedex 9 (FR); FAUGERAS, Alain, 63040 Clermont-Ferrand Cedex 9 (FR)
(74) Mandataire: M.F.P. Michelin
(86) Numéro de dépôt international: PCT/FR2020/052198
(87) Numéro de publication internationale: WO 2021/105630

(56) Documents cités:
- EP-A1- 1 384 765
- JP-A- H05 192 930
- JP-A- H11 198 150
- US-A1- 2008 093 771

## Description

Le domaine de la présente invention est celui des stratifiés à base de compositions de caoutchouc silicone destinées à être utilisées comme revêtement sur une surface de caoutchouc diénique réticulée, notamment des membranes de cuisson expansibles.

Les membranes de cuisson expansibles pour la fabrication de pneumatique sont traditionnellement faites d'un matériau caoutchouteux qui est généralement une composition réticulée et renforcée de caoutchouc butyl, copolymère d'isobutylène et d'isoprène. Les compositions constitutives des membranes de cuisson traditionnellement utilisées sont donc de composition très proche des compositions de caoutchouc qui constituent la gomme intérieure des pneumatiques et qui entrent en contact avec la surface de la membrane d'un moule de cuisson au moment de la cuisson du pneumatique.

En effet, les pneumatiques sont habituellement obtenus par moulage et vulcanisation d'une enveloppe crue à l'intérieur d'un moule de cuisson. Les parois externes de l'enveloppe sont plaquées contre les parois internes du moule de cuisson au moyen d'une membrane de cuisson expansible sous l'effet d'un fluide sous pression. Le dessin de la bande de roulement des garnitures du moule et celui des coquilles s'impriment sur l'enveloppe crue qui est vulcanisée à l'aide de la chaleur.

La membrane de cuisson se déploie à l'intérieur de l'enveloppe crue avant la cuisson et elle se replie à la fin de chaque cycle de cuisson. En raison de la similitude de leur composition chimique, la surface de la membrane et la surface de la gomme intérieure du pneumatique ont tendance à se coller l'une à l'autre. Cette propension à se coller peut gêner le repliement de la membrane à la fin d'un cycle de cuisson, ainsi que l'opération de démoulage du pneumatique, ce qui se traduit dans les deux cas par une dégradation de la surface de la membrane de cuisson ou de la surface intérieure de la gomme intérieure du pneumatique. La surface de la membrane de cuisson qui entre au contact de la gomme intérieure du pneumatique est désignée ci-après par la surface extérieure de la membrane.

Par ailleurs, les cycles de déploiement et de repli de la membrane de cuisson à l'intérieur de l'enveloppe crue génèrent des phénomènes de glissement de la surface extérieure de la membrane sur la gomme intérieure du pneumatique. Les cycles répétés de glissement ont également pour conséquence de produire des déformations de l'enveloppe et l'usure de la membrane.

La cuisson du pneumatique libère des gaz tels que la vapeur d'eau dans le moule de cuisson, plus particulièrement entre la surface extérieure de la membrane et la surface de la gomme intérieure du pneumatique. Une accumulation de ces gaz qui seraient piégés entre la surface extérieure de la membrane et la gomme intérieure du pneumatique peut provoquer des surchauffes locales ou des surpressions locales sur la surface extérieure de la membrane ou sur la gomme intérieure, ce qui se traduit généralement par des défauts de moulage, défauts qui sont visibles à la surface de la gomme intérieure du pneumatique.

Pour limiter les défauts de moulage résultant de l'accumulation de gaz, il est prévu des évents dans la presse de cuisson pour faciliter l'évacuation des gaz.

Pour prévenir l'usure de la membrane et la déformation de l'enveloppe, notamment en empêchant leur adhésion l'une à l'autre, la gomme intérieure de l'enveloppe crue des pneumatiques est généralement enduite d'une solution à propriété anti-collante, par exemple à base de polymères silicones, et connue sous le nom de « badigeon » (en anglais « lining cement »). Un tel traitement est fait avant la cuisson, par un opérateur qui travaille sur un poste dédié, en sortie du procédé d'assemblage des semi-finis constitutifs du pneumatique. Cette opération s'avère très consommatrice de temps et de main d'oeuvre.

Pour pallier ce problème, il a été proposé de supprimer cette étape en modifiant la membrane de cuisson, soit en enduisant sa surface extérieure avec une dispersion aqueuse d'une huile silicone non réactive et d'une poudre de caoutchouc silicone, soit en la recouvrant d'une composition de caoutchouc silicone réticulé. On peut par exemple se référer aux documents JP 2000-158454 et US 20080093771. La surface de la membrane étant recouverte par une composition de caoutchouc silicone réticulé, les défauts de moulage persistent.

Document JP H05 192930 (A) décrit l'application d'un agent de démoulage contenant un caoutchouc silicone sur la surface d'une membrane de cuisson pour pneumatique au préalable modifiée par un traitement au corona, puis la réticulation du caoutchouc silicone pour former un film élastique lié fermement à la membrane. Le film peut être formé en deux ou plusieurs couches en répétant la séquence formée par l'étape d'application et l'étape de réticulation. L'agent de démoulage peut être préparé en mélangeant 12 à 40 parties en poids d'un caoutchouc silicone, 0 à 35 parties en poids d'une poudre silicone, 0 à 35 parties en poids d'une poudre inorganique et 18 à 88 parties en poids d'un solvant diluant.

Document JP H11 198150 (A) décrit une composition de silicone utilisée en tant qu'agent de démoulage lors de la cuisson de pneumatique. La composition de silicone comprend un organopolysiloxane comprenant au moins un groupe hydroxyle et un silane comprenant un groupement glycidyle et est appliquée sur une couche de caoutchouc butyle afin de former un système stratifié utilisé dans le démoulage d'objets de cuisson tels que des pneumatiques. Le composition de silicone est réticulée par réaction de condensation et peut comprendre une poudre micrométrique inorganique ou organique, telle qu'une poudre de silicone, en tant qu'additif. La composition de silicone peut être appliquée en couches successives sur la couche de caoutchouc butyle.

Le document EP 1 384 765 (A) décrit une composition de revêtement de silicone utilisable en tant que feuille décollable. La composition comprend un organopolysiloxane comprenant des groupes SiH, un organopolysiloxane comprenant des groupes alkényles, un catalyseur d'hydrosilylation et des microparticules de silicone ayant un diamètre de 3 microns. La poudre de silicone peut être traitée en surface par un polysilsesquioxane.

La Demanderesse a découvert qu'un stratifié constitué de plusieurs couches de compositions spécifiques de caoutchouc de silicone permet de résoudre les problèmes mentionnés, lorsque le stratifié est utilisé comme revêtement de la surface extérieure d'une membrane expansible pour moule de cuisson d'un pneumatique.

Ainsi, un premier objet de l'invention est un stratifié comprenant une première couche et une deuxième couche recouvrant directement la première couche, la première couche étant une couche d'une composition de caoutchouc silicone comprenant une poudre micrométrique de silicone et un mélange d'organopolysiloxanes réticulables, la deuxième couche étant une couche d'une composition de caoutchouc silicone comprenant une silice hydrophobe et un mélange d'organopolysiloxanes réticulables, la première couche et la deuxième couche étant réticulées.

L'invention concerne aussi une membrane expansible pour moule de cuisson, laquelle membrane est constituée tout ou partie d'un stratifié conforme à l'invention.

L'invention porte également sur un procédé de fabrication d'un pneumatique qui comprend la cuisson d'une enveloppe crue d'un pneumatique dans un moule de cuisson équipée d'une membrane expansible conforme à l'invention.

### Description

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par substance liquide une substance ayant la capacité de prendre à terme la forme de son contenant à température ambiante (23°C).

Par « recouvre directement» on entend recouvre tout en étant au contact de. Par exemple, une couche qui recouvre directement une autre couche correspond à une couche qui recouvre une autre couche tout en étant à son contact.

La composition de caoutchouc silicone constitutive de la première couche a pour caractéristique de comprendre une poudre micrométrique de silicone. On entend par poudre micrométrique une poudre constituée de microparticules. La poudre micrométrique de silicone présente préférentiellement une taille moyenne allant de 5 à 100 µm, plus préférentiellement allant de 5 à 50 µm. L'analyse de la taille des microparticules peut être réalisée pour déterminer en particulier la taille moyenne des microparticules (ou diamètre médian pour des microparticules supposées sensiblement sphériques), notamment selon la norme ISO-8130-13. La poudre micrométrique de silicone a préférentiellement une dureté Shore A inférieure à 60, plus préférentiellement inférieure à 50, encore plus préférentiellement comprise entre 20 et 40. De manière bien connue, la dureté Shore A est déterminée typiquement par la norme ASTM D 2240-97.

Les poudres micrométriques de silicone sont des produits bien connus et sont par exemple décrites dans la demande de brevet US 5,538,793. Ce sont aussi des produits disponibles commercialement, par exemple sous les dénominations commerciales « KMP-594 », « KMP-597 », « KMP-598 », « KMP-600 », « KMP- 601 » and « KMP-602 » de Shin-Etsu Co. De préférence, la poudre micrométrique de silicone est constituée de microparticules de caoutchouc silicone réticulé recouvertes d'une résine silicone, la résine silicone étant un polyorganosilsesquioxane. Conviennent tout particulièrement les microparticules d'appellation commerciales « KMP-600 », « KMP- 601 » and « KMP-602 » de Shin-Etsu Co, encore plus particulièrement les microparticules d'appellation commerciales « KMP-602 ».

De préférence, la poudre micrométrique de silicone est présente dans la composition de caoutchouc silicone de la première couche à un taux massique de 5% à 35% du poids total de la composition de caoutchouc silicone de la première couche.

La composition de caoutchouc silicone constitutive de la deuxième couche a pour caractéristique de comprendre une silice hydrophobe. De manière connue, une silice hydrophobe est une silice dont une partie de la surface est recouverte de groupes organiques tels que des groupes alkyles. La silice peut être toute silice renforçante connue de l'homme du métier, notamment toute silice précipitée ou pyrogénée. De préférence, la silice hydrophobe présente une surface spécifique BET inférieure à 450 m²/g, de manière préférentielle comprise dans un domaine allant de 80 à 400 m²/g, notamment de 100 à 300 m²/g, avantageusement de 150 à 250 m²/g. On peut aussi utiliser un mélange de plusieurs silices hydrophobes.

Pour rendre la silice hydrophobe, il est bien connu de modifier la surface de la silice. La modification de la surface d'une silice peut être obtenue de manière connue par réaction de la silice avec des composés qui portent des groupes hydrophobes comme les groupes trialkylsilyles, notamment triméthylsilyles. Convient tout particulièrement une silice qui présente une surface modifiée par des groupes triméthylsilyles, plus particulièrement une silice modifiée par l'hexaméthyldisilazane. Selon l'un quelconque des modes de réalisation de l'invention, la silice hydrophobe contient préférentiellement plus de 2% en masse de carbone, plus préférentiellement au moins 3% en masse de carbone.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17].

Le taux de silice hydrophobe est ajusté par l'homme du métier en fonction de sa surface spécifique et de l'usage de la composition de caoutchouc silicone. De préférence, la silice hydrophobe est présente dans la composition de caoutchouc silicone de la deuxième couche à un taux massique supérieur ou égal à 5% du poids total de la composition de caoutchouc silicone de la deuxième couche et inférieur ou égal à 40% du poids total de la composition de caoutchouc silicone de la deuxième couche.

Les compositions de caoutchouc silicone constitutives de la première couche et de la deuxième couche ont aussi pour autre caractéristique de comprendre un mélange d'organopolysiloxanes réticulables. Selon l'un quelconque des modes de réalisation de l'invention, le mélange d'organopolysiloxanes réticulables représente préférentiellement plus de 50% en masse de la composition de caoutchouc silicone qui le contient. Autrement dit, le mélange d'organopolysiloxanes réticulables dans la première couche représente préférentiellement plus de 50% en masse de la composition de caoutchouc silicone de la première couche, et le mélange d'organopolysiloxanes réticulables dans la deuxième couche représente préférentiellement plus de 50% en masse de la composition de caoutchouc silicone de la deuxième couche.

De préférence, le mélange d'organopolysiloxanes réticulables est un mélange d'un premier organopolysiloxane liquide et d'un deuxième organopolysiloxane liquide. Le premier organopolysiloxane a des motifs de répétition (R₂SiO_{2/2}) et a deux extrémités de chaîne portant chacune un groupe alcényle, le deuxième organopolysiloxane a des motifs de répétition (R'HSiO_{2/2}) et a deux extrémités de chaîne portant chacune un groupe SiR'₃O_{1/2}, les symboles R, identiques ou différents, représentant un groupe alkyle, aryle ou aralkyle, les symboles R', identiques ou différents, représentant un groupe alkyle.

De préférence, au moins l'un des premier organopolysiloxane et deuxième organopolysiloxane est à chaîne linéaire. De manière préférentielle, le premier organopolysiloxane et le deuxième organopolysiloxane sont à chaîne linéaire.

Le groupe alcényle en extrémité de chaîne du premier organopolysiloxane est préférentiellement un groupe vinyle. Les groupes représentés par les symboles R et R' contiennent préférentiellement 1 à 8 atomes de carbone, plus préférentiellement 1 à 3 atomes de carbone. Les symboles R dans les motifs (R₂SiO_{2/2}) représentent préférentiellement un alkyle. Le premier organopolysiloxane est préférentiellement un polydialkylsiloxane, plus préférentiellement un polydiméthylsiloxane. Le deuxième organopolysiloxane est préférentiellement un polyhydrométhylsiloxane. Les symboles R' dans SiR'₃O_{1/2} représentent préférentiellement un méthyle. Avantageusement, le deuxième organopolysiloxane est un polyhydrométhylsiloxane linéaire portant à ses extrémités de chaîne un groupe SiMe₃O_{1/2}.

Le premier organopolysiloxane a préférentiellement une masse moléculaire moyenne en poids supérieure à 5000 et inférieure à 200 000 g/mol, plus préférentiellement supérieure à 10 000 et inférieure à 150 000 g/mol. Le deuxième organopolysiloxane a préférentiellement une masse moléculaire moyenne en poids supérieure à 500 et inférieure à 30 000 g/mol, plus préférentiellement supérieure à 500 et inférieure à 10 000 g/mol, encore plus préférentiellement supérieure à 1000 et inférieure à 5000 g/mol.

Selon un mode de réalisation particulier de l'invention, le ratio entre le nombre de motifs (R'HSiO_{2/2}) et le nombre de groupes alcényles est supérieur à 5, préférentiellement supérieur à 15, plus préférentiellement supérieur à 25. Le ratio entre le nombre de motifs (R'HSiO_{2/2}) et le nombre de groupes alcényles est avantageusement inférieur à 100, plus avantageusement inférieur à 90. En particulier, le ratio entre le nombre de motifs (RHSiO_{2/2}) et le nombre de groupes alcényles est supérieur à 25 et inférieur à 90. A partir de ces ratios préférentiels sont ajustées en conséquence les quantités respectives du premier organopolysiloxane et du deuxième organopolysiloxane dans la composition selon l'invention. La composition de caoutchouc selon ce mode de réalisation particulier, y compris dans ses variantes préférentielles, peut être utilisée en tant que revêtement sur la surface d'une membrane de cuisson sans qu'il soit nécessaire au préalable d'appliquer un primaire d'adhésion à la surface de la membrane ou bien de procéder à un traitement au plasma ou corona.

Les compositions de caoutchouc silicone constitutives de la première couche et de la deuxième couche contiennent typiquement un catalyseur apte à catalyser la réticulation du mélange d'organopolysiloxanes réticulables. Lorsque la réticulation procède d'une réaction d'hydrosilylation, par exemple par réaction de motifs (R'HSiO_{2/2}) tels que définis précédemment sur des groupes alcényles, le catalyseur est un catalyseur d'hydrosilylation, typiquement au platine Pt(0) complexé par des ligands divinyltétraalkylsiloxane, de préférence 1,3-divinyltétraméthylsiloxane. De tels catalyseurs sont par exemple décrits dans le document WO 0142258 A1. Convient tout particulièrement le catalyseur de Karstedt. Comme dans toute réaction d'hydrosilylation conventionnelle, la quantité de catalyseur dans la composition est catalytique. Par quantité catalytique on entend moins d'un équivalent molaire de platine par rapport à la quantité d'insaturations de type double liaison oléfinique présentes dans la composition. De façon générale, il suffit d'introduire moins de 1000 ppm et de préférence plus de 30 ppm de platine calculé par rapport à la masse totale du premier organopolysiloxane et du deuxième organopolysiloxane présents dans chacune des couches. Ainsi selon certains modes de réalisation particuliers, les compositions de caoutchouc silicone constitutives de la première couche et de la deuxième couche contiennent un catalyseur d'hydrosilylation apte à catalyser la réticulation du mélange d'organopolysiloxanes réticulables.

La réticulation est déclenchée typiquement en portant la composition de caoutchouc silicone à une température suffisante pour permettre la réticulation. Elle est conduite généralement à une température comprise entre 15 et 300°C, par exemple entre 20°C et 240°C, mieux encore entre 70 et 200°C.

Lorsque la réticulation procède d'une réaction d'hydrosilylation, de manière connue les compositions de silicones réticulables contiennent généralement un inhibiteur. Les inhibiteurs sont généralement utilisés pour régler la température et le temps de la réaction de réticulation par hydrosilylation et maîtriser ainsi davantage la réaction de réticulation, notamment son démarrage et sa vitesse. Si un inhibiteur de réticulation est utilisé, la quantité d'inhibiteur utilisée est préférentiellement de 1 à 50000 ppm, plus préférentiellement de 20 à 2000 ppm, et notamment de 100 à 1000 ppm, par rapport à la masse totale du premier organopolysiloxane et du deuxième organopolysiloxane. Comme inhibiteur conviennent tout particulièrement les alcools acétyléniques, comme le 1-éthynyl-1-cyclohexanol, le 2-méthyl-3-butyn-2-ol, le 3,5-diméthyl-1-hexyne-3-ol, le 3-méthyl-1-dodecyn-3-ol, le 2-phényl-3-butyn-2-ol. De préférence, la composition de caoutchouc silicone selon l'invention contient un inhibiteur.

Selon encore un autre mode de réalisation particulier de l'invention, la composition de caoutchouc silicone constitutive de l'une des première et deuxième couches, de préférence de la deuxième couche, contient en outre des microparticules de polyamide qui présentent une température de fusion supérieure à 100°C. L'incorporation des microparticules de polyamide permet d'améliorer les propriétés de résistance au frottement du stratifié lorsque le stratifié est utilisé comme revêtement de la surface extérieure d'une membrane de cuisson. Ce résultat est obtenu sans que le revêtement ne perde de sa souplesse pour pouvoir se déformer au gré des cycles de cuisson et puisse garder son adhérence à la surface de la membrane de cuisson malgré les déformations répétées de la membrane qui se déploie et se replie sur elle-même à chaque cycle de cuisson.

De préférence, la composition de caoutchouc silicone constitutive de la deuxième couche contient des microparticules de polyamide présentant une température de fusion supérieure à 100°C.

Les microparticules de polyamide peuvent être des produits disponibles commercialement, par exemple par la société Arkema telles que celles commercialisées sous le nom « Orgasol ». Les microparticules de polyamide peuvent être de toute forme, préférentiellement elles sont sphériques.

Les microparticules de polyamide présentent de préférence une température de fusion supérieure à 150°C. La température de fusion est conventionnellement mesurée selon la norme ASTM D3418-03. A titre de polyamides qui conviennent, on peut citer le nylon 6, le nylon 6,6, le nylon 6,10, le nylon 6,12, le nylon 11 et le nylon 12. Les microparticules de polyamide présentent de préférence une granulométrie de 5 à 100 µm, avantageusement de 10 à 70 µm. La granulométrie est déterminée typiquement selon la norme ISO 13319-2007.

La composition de caoutchouc silicone qui contient les microparticules de polyamide en contient préférentiellement de 5 à 15% de son poids. Autrement dit, le taux massique des microparticules de polyamide dans une composition de caoutchouc silicone qui contient les microparticules de polyamide est supérieur ou égal à 5% et inférieur ou égal à 15% du poids total de la composition de caoutchouc silicone. Lorsque la composition de caoutchouc silicone constitutive de la deuxième couche contient les microparticules de polyamide, le taux total de silice hydrophobe et de microparticules de polyamide dans la deuxième couche varie préférentiellement de 10 à 45% du poids total de la composition de caoutchouc silicone constitutive de la deuxième couche.

La composition de caoutchouc silicone constitutive de la première couche peut être préparée par l'incorporation de la poudre micrométrique de silicone au premier organopolysiloxane, suivie de l'addition du deuxième polyorganosiloxane sous mélangeage, enfin celle du catalyseur. Lorsqu'un inhibiteur est utilisé, il est typiquement ajouté au mélange de poudre micrométrique de silicone et du premier organopolysiloxane avant l'incorporation du deuxième organopolysiloxane. Pour faciliter le mélangeage, il est ajouté de préférence un solvant silicone, de préférence le décaméthylcyclopentasiloxane. L'ajout du solvant permet non seulement de faciliter l'incorporation des constituants de la composition de caoutchouc silicone et leur homogénéisation dans la composition de caoutchouc silicone, mais aussi d'ajuster la viscosité de la composition de caoutchouc silicone en vue de son application sur un substrat. Lorsque la composition de caoutchouc silicone est réticulée, tout ou partie du solvant est éliminé au cours de la réticulation de la composition de caoutchouc silicone.

La composition de caoutchouc silicone constitutive de la deuxième couche est préparée de manière analogue si ce n'est que la poudre micrométrique de silicone est remplacée par la silice hydrophobe.

Pour préparer le stratifié conforme à l'invention, on forme une première couche constituée de la composition de caoutchouc silicone encore à l'état cru et comprenant la silice hydrophobe et le mélange d'organopolysiloxanes réticulables, puis on la réticule, ensuite on dépose une deuxième couche constituée de la composition de caoutchouc silicone encore à l'état cru et comprenant la poudre micrométrique de silicone et le mélange d'organopolysiloxanes réticulables, puis on la réticule. La première couche présente préférentiellement une épaisseur allant de 5 à 100 µm, la deuxième couche présente préférentiellement une épaisseur allant de 5 à 100 µm. Le dépôt des compositions de caoutchouc silicone peuvent se faire à l'aide de pinceau, de brosse ou par projection (« spray » en anglais).

Lorsque le stratifié est mis en contact d'une gomme intérieure d'un pneumatique en plaquant la surface de la première couche du stratifié sur la surface de la gomme intérieure d'un pneumatique, le stratifié peut être détaché de la gomme intérieure sans dégradation ni du stratifié, ni de la gomme intérieure. Par ailleurs, tout mouvement relatif entre le stratifié et la gomme intérieure est facilité par les propriétés de glissement de la première couche sur la surface de la gomme intérieure.

Selon un mode de réalisation tout particulièrement préférentiel de l'invention, le stratifié contient une troisième couche d'une composition de caoutchouc diénique réticulé, la deuxième couche recouvrant directement la troisième couche.

Selon une variante préférentielle de ce mode de réalisation tout particulièrement préférentiel de l'invention, la composition de caoutchouc constitutive de la troisième couche comprend un caoutchouc butyl qui représente avantageusement plus de 90%, mieux 100% en masse de la totalité des élastomères de la composition de caoutchouc constitutive de la troisième couche.

Selon cette variante préférentielle, le stratifié composé alors de 3 couches constitue avantageusement tout ou partie une membrane expansible pour moule de cuisson, la première couche présentant une épaisseur allant préférentiellement de 5 à 100 µm, la deuxième couche présentant une épaisseur allant préférentiellement de 5 à 100 µm. L'épaisseur de la troisième couche est choisie par l'homme du métier selon l'usage qu'il est fait du stratifié. La troisième couche a typiquement une épaisseur allant de 1 à 10 mm, notamment lorsque le stratifié est destiné à constituer tout ou partie une membrane expansible pour moule de cuisson d'un pneumatique.

Les membranes de cuisson expansibles, notamment destinées à la fabrication de pneumatique sont bien connues de l'homme du métier. Elles sont constituées de compositions à base de caoutchouc butyl, halogéné ou non. Le caoutchouc butyl est un copolymère d'isobutylène et d'isoprène connu pour ses propriétés d'étanchéité. Une composition de caoutchouc constitutive d'une membrane de cuisson expansible contient généralement une charge renforçante telle qu'un noir de carbone. Elle contient aussi un système de réticulation composé d'une résine. Les systèmes de réticulation composés d'une résine et utilisés pour réticuler des compositions de caoutchouc pour membrane de cuisson expansible sont aussi bien connus de l'homme du métier. La résine est typiquement une résine phénolique, halogénée ou non. A titre de résine phénolique, on peut citer les résines formophénoliques. La composition de caoutchouc constitutive d'une membrane de cuisson peut comprendre divers ingrédients comme des antioxydants, des antiozonants, des pigments, des cires, des plastifiants comme des huiles de mise en oeuvre.

Lorsque le stratifié est constitutif d'une membrane expansible pour moule de cuisson d'un pneumatique, la première couche du stratifié est destinée à entrer au contact de la gomme intérieure du pneumatique dans le moule de cuisson. Non seulement le stratifié empêche la membrane de coller à la gomme intérieure du pneumatique, mais aussi il favorise son glissement sur la surface de la gomme intérieure tout en facilitant l'évacuation des gaz de cuisson. Par conséquent, la membrane expansible pour moule de cuisson qui est constituée d'un stratifié conforme à l'invention et qui est un autre objet de l'invention, peut être utilisée pour plusieurs cycles de cuisson dans un moule de cuisson pour pneumatique sans qu'il ne soit observé des défauts de moulage, ce qui permet de réduire la fréquence de changement des membranes dans le moule de cuisson et ainsi d'augmenter la productivité d'un procédé de fabrication des pneumatiques. La membrane selon l'invention est typiquement une membrane destinée à être utilisée dans un moule de cuisson pour pneumatique.

### Exemples

### Test d'allongement :

L'échantillon à tester est obtenu par un emporte-pièce de 10[mm] x 140[mm]. L'échantillon est placé dans un étau. A l'aide d'une pince et d'une règle de 300[mm], on étire l'échantillon jusqu'à avoir 100% de déformation. Cette déformation est faite 10x à une fréquence de 1 Hz.

### Test de frottement :

Il est effectué sur une barre en acier de rugosité environ 1.6. Diamètre 12[mm] et longueur 70[mm]. On place la barre verticalement dans l'étau. On prend l'échantillon déjà testé en allongement. On effectue des va-et-vient de l'échantillon avec une courbure de 180° côté traité (face de l'échantillon revêtue de la composition de caoutchouc silicone) contre la barre en exerçant une force de frottement de 5 kilogramme-force. On répète 20 cycles, un cycle correspondant à un va-et-vient à une fréquence comprise entre 1 et 2 Hz.

### Analyse :

Après le test d'allongement ou de frottement, l'échantillon est observé par analyse de microscopie à balayage (modèle FEG 250 de la société FEI/ThermoFischer, détecteur ETD Everhart Thornley detector, 1 kV) pour vérifier la présence ou non de fissures ou de décollement. L'analyse de microscopie permet d'estimer aussi l'épaisseur de la couche de la composition de caoutchouc silicone appliquée comme revêtement.

### Préparation des compositions de caoutchouc :

### Exemple 1 :

Une silice hydrophobe (5.846 g, HDK-2000, Wacker) est incorporée à un polydiméthysiloxane α,ω-vinyle (10.815 g, DMS V35 de masse moléculaire moyenne en poids de 49500, Gelest) par mélangeage d'une minute dans un mélangeur (« StateMix »). On ajoute ensuite une solution d'inhibiteur (11mg, 1-éthynyl-1-cyclohexanol, Aldrich E51406) dans le décamethylcyclopentasiloxane (10.366 g, TCI Europe, D1890) par mélangeage d'une minute dans le mélangeur (« StateMix »). Les microparticules de polyamide (1.95 g, « Orgasol ES3 Nat 3 », Arkema) sont ajoutées et le tout est mélangé au mélangeur 1 minute (State Mix). Dans le mélange résultant, on incorpore une solution de PHMS (0.86g, poly(méthylhydro)siloxane, Mw 3200, référence 17,620-6, Sigma Aldrich ) dans le décamethylcyclopentasiloxane (4.21g, D, TCI Europe, D1890) par mélangeage dans le mélangeur (StateMix, fonctionnant à 100% de sa puissance). On ajoute pour terminer une solution du catalyseur Karstedt (36.1 µl, Aldrich 479519) dans le décamethylcyclopentasiloxane (15.89g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé. Dans la composition de caoutchouc silicone, le ratio entre le nombre de motifs (MeHSiO_{2/2}) et le nombre de groupes vinyles est de 32.

La composition de caoutchouc silicone réticulée sous la forme d'une couche d'épaisseur 20-50 µm présente une bonne adhérence à la membrane et ne se décolle pas de la membrane même après avoir subi successivement 10 élongations à 100% de déformation.

Par ailleurs, il est observé que les microparticules de polyamide ne sont pas éliminées du revêtement par frottement. Les microparticules de polyamide ne sont pas arrachées du revêtement lorsqu'il est soumis au test de frottement.

Sur cette couche de composition de caoutchouc silicone réticulée d'épaisseur 20-50 µm, on dépose une couche d'une deuxième composition de caoutchouc silicone obtenue comme suit :

28.75 g de poudre micrométrique de silicone (KMP-602, Shin-Etsu, Japan) sont incorporés à un polydiméthysiloxane α,ω-vinyle (62.1 g, DMS V35 de masse moléculaire moyenne en poids de 49500, Gelest) par mélangeage d'une minute dans un mélangeur (« StateMix »). On ajoute ensuite une solution d'inhibiteur (63 mg, 1-éthynyl-1-cyclohexanol, Aldrich E51406) dans le décamethylcyclopentasiloxane (9.09 g, TCI Europe, D1890) par mélangeage d'une minute dans le mélangeur (« StateMix »). Dans le mélange résultant (34.32 g), on incorpore le décamethylcyclopentasiloxane (16.8 g, TCI Europe, D1890) par mélangeage d'une minute dans un mélangeur (« StateMix »). On ajoute dans le mélange résultant, une solution de PHMS (1.823g, poly(méthylhydro)siloxane, Mw 3200, référence 17,620-6, Sigma Aldrich ) dans le décamethylcyclopentasiloxane (5.1g, TCI Europe, D1890) par mélangeage dans le mélangeur (StateMix, fonctionnant à 100% de sa puissance). On ajoute pour terminer une solution du catalyseur Karstedt (75 µl, Aldrich 479519) dans le décamethylcyclopentasiloxane (41.9g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur la composition de caoutchouc silicone réticulée d'épaisseur 20-50 µm décrite en première partie de l'exemple 1. Le stratifié résultant est porté à 150°C pendant 30 minutes dans un four à air ventilé.

### Exemple 2 non conforme à l'invention :

L'exemple 2 diffère de l'exemple 1 en ce que la stratifié ne contient pas de couche de composition de caoutchouc silicone comprenant une poudre micrométrique de silicone. Les membranes de cuisson sont utilisées dans un moule de cuisson pour pneumatique pour cuire une enveloppe crue d'un pneumatique.

Dans le cas de l'exemple 2, au démoulage et dès la fin du premier cycle de cuisson, on observe des défauts de moulage sur la gomme intérieure du pneumatique cuit, tels que des aspérités, des trous, des replis.

Ces défauts de moulage ne sont pas observés pour la membrane de l'exemple 1 conforme à l'invention. Par ailleurs, la composition de caoutchouc silicone réticulée d'épaisseur 20-50 µm présente une bonne adhérence à la membrane même après avoir subi successivement 10 élongations à 100% de déformation. Il est aussi observé que les microparticules de silicone ne sont pas éliminées du revêtement par frottement. Les microparticules de silicone ne sont pas arrachées du revêtement lorsqu'il est soumis au test de frottement. Il est également observé que les microparticules de polyamide ne sont pas éliminées du revêtement par frottement. Les microparticules de polyamide et de silicone ne sont pas arrachées du revêtement lorsqu'il est soumis au test de frottement.

La membrane de l'exemple 1 peut être utilisée pendant plusieurs cycles de cuisson sans dégradation de sa surface extérieure et sans qu'il ne soit observé de défauts de moulage.

## Revendications

1. Stratifié comprenant une première couche et une deuxième couche recouvrant directement la première couche, la première couche étant une couche d'une composition de caoutchouc silicone comprenant une poudre micrométrique de silicone et un mélange d'organopolysiloxanes réticulables, la deuxième couche étant une couche d'une composition de caoutchouc silicone comprenant une silice hydrophobe et un mélange d'organopolysiloxanes réticulables, la première couche et la deuxième couche étant réticulées.

2. Stratifié selon la revendication 1 dans lequel la poudre micrométrique de silicone est constituée de microparticules de caoutchouc silicone réticulé recouvertes d'une résine silicone, la résine silicone étant un polyorganosilsesquioxane.

3. Stratifié selon l'une quelconque des revendications 1 à 2 dans lequel la poudre micrométrique de silicone est présente dans la composition de caoutchouc de la première couche à un taux massique de 5% à 35% du poids total de la composition de caoutchouc silicone de la première couche.

4. Stratifié selon l'une quelconque des revendications 1 à 3 dans lequel la silice hydrophobe est présente dans la composition de caoutchouc silicone de la deuxième couche à un taux massique supérieur ou égal à 5% du poids total de la composition de caoutchouc silicone de la deuxième couche et inférieur ou égal à 40% du poids total de la composition de caoutchouc silicone de la deuxième couche.

5. Stratifié selon l'une quelconque des revendications 1 à 4 dans lequel le mélange d'organopolysiloxanes réticulables de la première couche et de la deuxième couche est un mélange d'un premier organopolysiloxane liquide et d'un deuxième organopolysiloxane liquide, le premier organopolysiloxane ayant des motifs de répétition (R₂SiO_{2/2}) et ayant deux extrémités de chaîne portant chacune un groupe alcényle, de préférence vinyle, le deuxième organopolysiloxane ayant des motifs de répétition (R'HSiO_{2/2}) et ayant deux extrémités de chaîne portant chacune un groupe SiR'₃O_{1/2}, les symboles R, identiques ou différents, représentant un groupe alkyle, aryle ou aralkyle, les symboles R', identiques ou différents, représentant un groupe alkyle.

6. Stratifié selon l'une quelconque des revendications 1 à 5 dans lequel le premier organopolysiloxane est un polydialkylsiloxane, de préférence un polydiméthylsiloxane, et le deuxième organopolysiloxane est un polyhydrométhylsiloxane.

7. Stratifié selon l'une quelconque des revendications 1 à 6 dans lequel la composition de caoutchouc silicone constitutive de l'une des première et deuxième couches contient des microparticules de polyamide présentant une température de fusion supérieure à 100°C, de préférence supérieure à 150°C, mesurée selon la norme ASTM D3418-03.

8. Stratifié selon l'une quelconque des revendications 1 à 7 dans lequel la composition de caoutchouc silicone constitutive de la deuxième couche contient des microparticules de polyamide présentant une température de fusion supérieure à 100°C, de préférence supérieure à 150°C, mesurée selon la norme ASTM D3418-03.

9. Stratifié selon l'une quelconque des revendications 7 à 8 dans lequel la composition de caoutchouc silicone qui contient les microparticules de polyamide en contient de 5% à 15% de son poids.

10. Stratifié selon l'une quelconque des revendications 1 à 9 dans lequel le mélange d'organopolysiloxanes réticulables représente plus de 50% en masse de la composition de caoutchouc silicone qui le contient.

11. Stratifié selon l'une quelconque des revendications 1 à 10 dans lequel la première couche présente une épaisseur allant de 5 à 100 µm, la deuxième couche une épaisseur allant de 5 à 100 µm, mesurée par microscopie à balayage.

12. Stratifié selon l'une quelconque des revendications 1 à 11, lequel stratifié contient une troisième couche d'une composition de caoutchouc diénique réticulé, la deuxième couche recouvrant directement la troisième couche.

13. Stratifié selon la revendication 12 dans lequel la composition de caoutchouc diénique réticulé constitutive de la troisième couche comprend un caoutchouc butyl.

14. Membrane expansible pour moule de cuisson, laquelle membrane est constituée tout ou partie d'un stratifié défini à l'une quelconque des revendications 12 à 13.

15. Procédé de fabrication d'un pneumatique qui comprend la cuisson d'une enveloppe crue d'un pneumatique dans un moule de cuisson équipée d'une membrane expansible définie selon la revendication 14.

## Patentansprüche

1. Laminat, umfassend eine erste Schicht und eine zweite Schicht, die die erste Schicht direkt bedeckt, wobei es sich bei der ersten Schicht um eine Schicht aus einer Silikonkautschukzusammensetzung, die ein mikroskaliges Silikonpulver und eine Mischung von vernetzbaren Organopolysiloxanen umfasst, handelt, wobei es sich bei der zweiten Schicht um eine Schicht aus einer Silikonkautschukzusammensetzung, die ein hydrophobes Siliciumdioxid und eine Mischung von vernetzbaren Organopolysiloxanen umfasst, handelt, wobei die erste Schicht und die zweite Schicht vernetzt sind.

2. Laminat nach Anspruch 1, wobei das mikroskalige Silikonpulver aus Mikroteilchen aus vernetztem Silikonkautschuk, die mit einem Silikonharz beschichtet sind, besteht, wobei es sich bei dem Silikonharz um ein Polyorganosilsesquioxan handelt.

3. Laminat nach einem der Ansprüche 1 bis 2, wobei das mikroskalige Silikonpulver in der Kautschukzusammensetzung der ersten Schicht in einem Massengehalt von 5 bis 35 % des Gesamtgewichts der Silikonkautschukzusammensetzung der ersten Schicht vorliegt.

4. Laminat nach einem der Ansprüche 1 bis 3, wobei das hydrophobe Siliciumdioxid in der Silikonkautschukzusammensetzung der zweiten Schicht in einem Massengehalt größer oder gleich 5 % des Gesamtgewichts der Silikonkautschukzusammensetzung der zweiten Schicht und kleiner oder gleich 40 % des Gesamtgewichts der Silikonkautschukzusammensetzung der zweiten Schicht vorliegt.

5. Laminat nach einem der Ansprüche 1 bis 4, wobei es sich bei der Mischung von vernetzbaren Organopolysiloxanen der ersten Schicht und der zweiten Schicht um eine Mischung aus einem ersten flüssigen Organopolysiloxan und einem zweiten flüssigen Organopolysiloxan handelt, wobei das erste Organopolysiloxan (R₂SiO_{2/2})-Wiederholungseinheiten und zwei Kettenenden, die jeweils eine Alkenylgruppe, vorzugsweise eine Vinylgruppe, tragen, aufweist, wobei das zweite Organopolysiloxan (R'HSiO_{2/2})-Wiederholungseinheiten und zwei Kettenenden, die jeweils eine SiR'₃O_{1/2}-Gruppe tragen, aufweist, wobei die Symbole R, die gleich oder verschieden sind, für eine Alkyl-, Aryl- oder Aralkylgruppe stehen und wobei die Symbole R', die gleich oder verschieden sind, für eine Alkylgruppe stehen.

6. Laminat nach einem der Ansprüche 1 bis 5, wobei es sich bei dem ersten Organopolysiloxan um ein Polydialkylsiloxan, vorzugsweise ein Polydimethylsiloxan, handelt und es sich bei dem zweiten Organopolysiloxan um ein Polyhydromethylsiloxan handelt.

7. Laminat nach einem der Ansprüche 1 bis 6, wobei die Silikonkautschukzusammensetzung, aus der die erste Schicht oder die zweite Schicht aufgebaut ist, Polyamid-Mikroteilchen mit einem Schmelzpunkt von mehr als 100 °C, vorzugsweise mehr als 150 °C, gemessen gemäß der ASTM-Norm D3418-03, enthält.

8. Laminat nach einem der Ansprüche 1 bis 7, wobei die Silikonkautschukzusammensetzung, aus der die zweite Schicht aufgebaut ist, Polyamid-Mikroteilchen mit einem Schmelzpunkt von mehr als 100 °C, vorzugsweise mehr als 150 °C, gemessen gemäß der ASTM-Norm D3418-03, enthält.

9. Laminat nach einem der Ansprüche 7 bis 8, wobei die Silikonkautschukzusammensetzung, die die Polyamid-Mikroteilchen enthält, diese in einer Menge von 5 bis 15 % ihres Gewichts enthält.

10. Laminat nach einem der Ansprüche 1 bis 9, wobei die Mischung von vernetzbaren Organopolysiloxanen mehr als 50 Massen-% der Silikonkautschukzusammensetzung, die sie enthält, ausmacht.

11. Laminat nach einem der Ansprüche 1 bis 10, wobei die erste Schicht eine Dicke im Bereich von 5 bis 100 µm aufweist und die zweite Schicht eine Dicke im Bereich von 5 bis 100 µm aufweist, gemessen durch Rastermikroskopie.

12. Laminat nach einem der Ansprüche 1 bis 11, wobei das Laminat eine dritte Schicht aus einer vernetzten Dienkautschukzusammensetzung enthält, wobei die zweite Schicht die dritte Schicht direkt bedeckt.

13. Laminat nach Anspruch 12, wobei die vernetzte Dienkautschukzusammensetzung, aus der die dritte Schicht aufgebaut ist, einen Butylkautschuk umfasst.

14. Expandierbare Membran für ein Vulkanisationsformwerkzeug, wobei die Membran ganz oder teilweise aus einem Laminat gemäß einem der Ansprüche 12 bis 13 besteht.

15. Verfahren zur Herstellung eines Reifens, das die Vulkanisation eines Reifenrohmantels in einem Vulkanisationsformwerkzeug, das mit einer expandierbaren Membran gemäß Anspruch 14 ausgestattet ist, umfasst.

## Claims

1. Laminate comprising a first layer and a second layer directly covering the first layer, the first layer being a layer of a silicone rubber composition comprising a micrometric silicone powder and a mixture of crosslinkable organopolysiloxanes, the second layer being a layer of a silicone rubber composition comprising a hydrophobic silica and a mixture of crosslinkable organopolysiloxanes, the first layer and the second layer being crosslinked.

2. Laminate according to Claim 1, in which the micrometric silicone powder consists of crosslinked silicone rubber microparticles that are coated with a silicone resin, the silicone resin being a polyorganosilsesquioxane.

3. Laminate according to either one of Claims 1 and 2, in which the micrometric silicone powder is present in the rubber composition of the first layer at a weight content of from 5% to 35% of the total weight of the silicone rubber composition of the first layer.

4. Laminate according to any one of Claims 1 to 3, in which the hydrophobic silica is present in the silicone rubber composition of the second layer at a weight content of greater than or equal to 5% of the total weight of the silicone rubber composition of the second layer and less than or equal to 40% of the total weight of the silicone rubber composition of the second layer.

5. Laminate according to any one of Claims 1 to 4, in which the mixture of crosslinkable organopolysiloxanes of the first layer and of the second layer is a mixture of a first liquid organopolysiloxane and a second liquid organopolysiloxane, the first organopolysiloxane having (R₂SiO_{2/2}) repeating units and having two chain ends each bearing an alkenyl group, preferably a vinyl group, the second organopolysiloxane having (R'HSiO_{2/2}) repeating units and having two chain ends each bearing an SiR'₃O_{1/2}group, the R symbols, which may be identical or different, representing an alkyl, aryl or aralkyl group, the R' symbols, which may be identical or different, representing an alkyl group.

6. Laminate according to any one of Claims 1 to 5, in which the first organopolysiloxane is a polydialkylsiloxane, preferably a polydimethylsiloxane, and the second organopolysiloxane is a polyhydromethylsiloxane.

7. Laminate according to any one of Claims 1 to 6, in which the constituent silicone rubber composition of one of the first and second layers contains polyamide microparticles having a melting point above 100°C, preferably above 150°C, measured according to the ASTM D3418-03 standard.

8. Laminate according to any one of Claims 1 to 7, in which the constituent silicone rubber composition of the second layer contains polyamide microparticles having a melting point above 100°C, preferably above 150°C, measured according to the ASTM D3418-03 standard.

9. Laminate according to either one of Claims 7 and 8, in which the silicone rubber composition which contains the polyamide microparticles contains from 5% to 15% of its weight thereof.

10. Laminate according to any one of Claims 1 to 9, in which the mixture of crosslinkable organopolysiloxanes represents more than 50% by weight of the silicone rubber composition which contains it.

11. Laminate according to any one of Claims 1 to 10, in which the first layer has a thickness ranging from 5 to 100 µm and the second layer a thickness ranging from 5 to 100 µm, measured by scanning microscopy analysis.

12. Laminate according to any one of Claims 1 to 11, which laminate contains a third layer of a crosslinked diene rubber composition, the second layer directly covering the third layer.

13. Laminate according to Claim 12, in which the constituent crosslinked diene rubber composition of the third layer comprises a butyl rubber.

14. Expandable bladder for a curing mould, which bladder is completely or partially formed of a laminate defined in either one of Claims 12 and 13.

15. Process for manufacturing a tyre which comprises the curing of a green tyre casing in a curing mould equipped with an expandable bladder defined according to Claim 14.
